# EUROPÄISCHE PATENTSCHRIFT

(11) **EP 0 553 478 B1**
(45) Veröffentlichungstag und Bekanntmachung des Hinweises auf die Patenterteilung: **04.06.1997**
(21) Anmeldenummer: 92121650.3
(22) Anmeldetag: 19.12.1992
(51) Int. Cl.: B60R 16/02

(54) **Einrichtung zum Nachweis von Störungen der Signalübertragung in Kraftfahrzeugen**
Installation for justifying pertubations of the signal transmission in vehicles
Installation pour justifier des perturbations de la transmission de signaux dans des véhicules

(30) Priorität: 30.01.1992 DE 4202583
(43) Veröffentlichungstag der Anmeldung: 04.08.1993
(73) Patentinhaber: VDO Adolf Schindling AG, 60326 Frankfurt/Main (DE)
(72) Erfinder: Widl, Gerhard, Dr.-Ing., W-8032 Grafelfing-Lochhamm (DE); Fichter, Manfred, W-7744 Königsfeld (DE)

(56) Entgegenhaltungen:
- WO-A-89/02151
- DE-A- 2 727 316
- DE-A- 4 116 042
- US-A- 4 217 484

## Beschreibung

Die Erfindung betrifft eine beispielsweise aus DE-A-2 727 316 bekannte Einrichtung zum Nachweis von Störungen der Signalübertragung in Kraftfahrzeugen unter Verwendung einer Aufzeichnungsanordnung, insbesondere der Signalübertragung zwischen Geschwindigkeitsmeß- und/oder Streckenzählgeräten und außerhalb dieser Geräte angeordneten Drehwertgebern.

Bekanntlich besitzen die von Fahrtschreibern und ähnlichen in Kraftfahrzeugen eingesetzten Geräten ermittelten und registrierten Daten insofern dokumentarischen Wert, als sie zur Klärung von Unfallsituationen, zur Feststellung der Benutzung und des Nutzungsgrades eines Fahrzeuges sowie als Arbeitszeit- und Pausennachweis für die auf dem Fahrzeug tätigen Fahrer dienen. Zwangsweise ergibt sich daraus die Gefahr, daß die Registrierungen dieser Geräte in betrügerischer Absicht verändert werden bzw. versucht wird, die Registrierungen nicht zustandekommen zu lassen. Auf der anderen Seite stellt sich das Problem, Manipulationen an der Spannungsversorgung der betreffenden Geräte und an der Signalübertragung nachweisen zu können, zumal dadurch, daß die Drehwertgeber extern angeordnet und über elektrische Leitungen und Steckverbindungen mit den betreffenden Geräten verbunden sind, vielfältige Manipulationsmöglichkeiten bestehen.

Zum Nachweis von Unterbrechungen der Betriebsspannung, was eine Raffung der Lenkzeit zur Folge hat und beispielsweise, um nicht als Manipulation sofort erkannt zu werden, mittels eines Blinkgebers oder Scheibenwischer-Intervallgebers erfolgen kann, ist es bekannt, eine Speicherschaltung vorzusehen, die beim Wiedereinschalten der Betriebsspannung eine fahrtuntypische Markierung, bei herkömmlichen Fahrtschreibern eine radiale Linie über das gesamte Geschwindigkeitsschreibfeld, registriert.

Ferner ist es bekannt, die Signalübertragung zweifach vorzunehmen und über eine zweite Signalleitung eine invertierte Signalfolge ein und desselben Drehwertgebers zu übertragen. Als Auswerte- bzw. Erkennungsschaltung dient geräteseitig ein Exklusiv-ODER-Gatter, welches bei einer Störung der Signalübertragung bei einem auf Diagrammscheiben aufzeichnenden Fahrtschreiber das Geschwindigkeitsregistrierorgan derart steuert, daß es definiert ausgelenkt wird und bei Andauern der Störung ein Balkendiagramm aufzeichnet.

Mit dieser Einrichtung läßt sich nachweisen, ob der Drehwertgeber völlig abgetrennt, die eine oder anderere Geberleitung unterbrochen oder mit anderen Leitungen kurzgeschlossen ist oder die Spannungsversorgung des Gebers unterbrochen ist. Insofern bietet diese Einrichtung auch eine relativ sichere Selbstüberwachung des Drehwertgebers samt den Signalleitungen und Kontaktverbindungen.

Es sind jedoch Manipulationsmaßnahmen bekannt, die, da sie die Bedingung der Phasenumkehr erfüllen, mit der geschilderten Einrichtung nicht erkannt werden können, mit anderen Worten eine ordnungsgemäße Geber- und Signalübertragungsfunktion simulieren. Auf diese Weise sind die für das Transportgewerbe geltenden Arbeitszeitvorschriften, die in dem bekanntermaßen harten Wettbewerb dieser Branche vielfach ignoriert werden, umgehbar, insbesondere läßt sich ein Einhalten der vorgeschriebenen Ruhezeiten vortäuschen, oder es können beispielsweise bei Taxen oder Mietwagen Schwarzfahrten unternommen werden, ohne daß irgendeine Streckenregistrierung erfolgt. Auch das Simulieren eines Geschwindigkeitsverlaufs, was ein unerkanntes Überschreiten gesetzlich vorgeschriebener Geschwindigkeitsgrenzwerte ermöglicht, zählt zu den bekannten Manipulationspraktiken.

Aufgabe der vorliegenden Erfindung ist es daher, bisher nicht nachweisbare Störungen der Signalübertragung sowie nicht dem Fahrtverlauf entsprechende Signale zu erkennen, und zwar mit möglichst einfachen und für die Großserie geeigneten Mitteln.

Die Lösung der Aufgabe sieht vor, daß wenigstens ein fahrttypische Kräfte sensierender Bewegungsgeber innerhalb des betreffenden Meßgerätes angeordnet ist und daß eine Auswerteschaltung vorgesehen ist, welche bei Nichtplausibilität von Signalen des Drehwertgebers mit Signalen des Bewegungsgebers ein die Aufzeichnungsanordnung steuerndes Störsignal liefert.

Ein manipulationsspezifisches Ausführungsbeispiel ist dadurch gekennzeichnet, daß zum Nachweis des Ausbleibens von Signalen des Drehwertgebers die Auswerteschaltung dann ein Störsignal liefert, wenn nach einer bestimmten Zeitdauer ein in der Auswerteschaltung gespeicherter Impuls des Bewegungsgebers nicht durch einen Impuls des Drehwertgebers gelöscht ist.

Die Auswerteschaltung dieses Ausführungsbeispiels enthält eine Flip-Flop-Stufe, deren Setzeingang dem Bewegungsgeber zugeordnet und deren Rücksetzeingang mit dem geräteseitigen Signaleingang des Drehwertgebers verschaltet ist und daß ein von den Impulsen des Bewegungsgebers steuerbarer Zeitgeber vorgesehen ist, dessen Ausgang über eine UND-Verbindung mit dem Ausgang der Flip-Flop-Stufe verknüpft ist.

Die gefundene Lösung hat den Vorteil, daß auf die bisherigen Maßnahmen zum Störungsnachweis verzichtet werden kann und beispielsweise nur noch eine Signalleitung für den Drehwertgeber erforderlich ist. Für die Erkennung des Ausbleibens von Signalen des Drehwertgebers genügt eine mit einfachen Mitteln aufgebaute Auswerteschaltung sowie ein oder mehrere Bewegungs- bzw. Beschleunigungsgeber relativ einfacher Bauart, welche, um Motorschwingungen, Erschütterungen beim Be- und Entladen oder durch Ein- und Aussteigen verursachte Fahrzeugschwingungen auszufiltern, für das Erfassen von fahrttypischen Längs- und/oder Querbeschleunigungen ausgelegt sind und in den für die betreffenden Kraftfahrzeuggeräte in Frage kommenden Einbaulagen im wesentlichen lageunabhängig arbeiten. Ist das betreffende Kraftfahrzeuggerät mit einem Mikroprozessor ausgerüstet, so kann das Auswerteprogramm mit dem Mikroprozessor durchgeführt und eine Aufzeichnung entweder in den vermutlich ebenfalls vorhandenen Datenspeicher eingeschrieben und/oder visuell lesbar, beispielsweise auf der Diagrammscheibe eines Fahrtschreibers, aufgezeichnet werden. Wird eine Pufferbatterie vorgesehen, bei bestimmten Geräten beispielsweise bei Fahrpreisrechnern ist diese ohnehin vorhanden, kann zumindest bei einer elektronischen Registrierung der Störungs- bzw. Manipulationsnachweis auch bei Spannungsunterbrechungen sichergestellt werden. Die elektronische Aufzeichnung eignet sich im übrigen besonders für Streckenzähler, die für die streckenabhängige Besteuerung von Kraftfahrzeugen vorgesehen werden, sofern für diesen Zweck nicht an einer Radnabe des Fahrzeugs angeordnete Radumdrehungszähler im Einsatz sind, was Manipulationen praktisch ausschließt.

Im folgenden sei ein Ausführungsbeispiel der Erfindung anhand der beigefügten Zeichnungen näher erläutert. Es zeigen
Fig. 1 eine Übersichtsdarstellung der Signalübertragungssituation zwischen einem Drehwertgeber und einem Fahrtschreiber,
Fig. 2 ein Blockschaltbild eines elektronischen Fahrtschreibers mit analoger Meßwertverarbeitung und einer Einrichtung gemäß der Erfindung,
Fig. 3 ein Schaltbild der in Fig. 2 als Block dargestellten Auswerteschaltung.

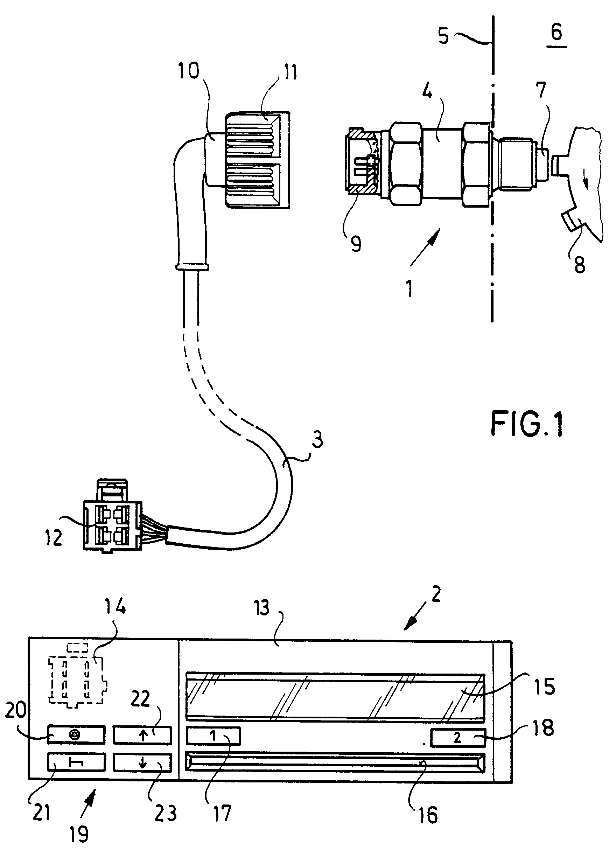

Aus der Übersichtsdarstellung Fig. 1 ist ersichtlich, daß der Drehwertgeber 1, von dem die erfaßten Drehwerte zählenden und/oder aufzeichnenden Gerät, hier einem Fahrtschreiber 2, räumlich getrennt angeordnet und mittels eines Kabels 3 mit diesem verbunden ist. Üblicherweise ist das im allgemeinen hülsenförmige Gebergehäuse 4 an einer nur symbolisch dargestellten Wand 5 des Getriebegehäuses des Kaftfahrzeuges angeflanscht. Der in den Getrieberaum 6 hineinragende Meßkopf 7 des Drehwertgebers 1 wirkt mit einem getriebeseitig vorgesehenen, ferromagnetischen Taktrad 8 zusammen, während an der Gegenseite des Gebergehäuses 4 ein Steckersockel 9 angebracht ist, mit welchem ein an dem Kabel 3 angeformter Stecker 10 mittels einer Überwurfmutter 11, die selbstverständlich plombiert wird, verbindbar ist. Am entgegengesetzten Ende des Kabels 3 ist ebenfalls ein Stecker 12 vorgesehen, der in einer geeigneten, an der Rückwand des Gehäuses 13 des Fahrtschreibers 2 ausgebildeten Steckerfassung 14 rastend verbindbar ist. Auch diese Steckerverbindung muß plombiert sein. Dennoch zeigt diese übliche Anordnung, daß, zumal gepanzerte Kabel aus Kostengründen nicht in Frage kommen, zwischen den Drehwertgebern und den betreffenden, im allgemeinen im oder im Umfeld des Armaturenbretts angeordneten Geräten Schwachstellen gegeben sind, die Manipulationseingriffe begünstigen. Da sich diese Schwachstellen in einem nicht ohne weiteres zugänglichen Raum des Kraftfahrzeugs befinden, sind subtilere und zeitlich begrenzte Manipulationen nicht ohne weiteres erkennbar, jedenfalls nicht bei stichprobenweisen Kontrollen, z. B. Verkehrskontrollen.

Der Vollständigkeit halber sei noch kurz auf den dargestellten Fahrtschreiber 2 eingegangen, an dessen Frontseite ein Display 15, ein Schlitz 16 und den Fahrern zugeordnete Tasten 17 und 18, bei deren Betätigung für den jeweiligen Fahrer automatisch Lenkzeit aufgezeichnet wird, sowie ein Tastenfeld 19 sichtbar sind. Über den Schlitz 16 sind als Aufzeichnungsträger dienende Diagrammscheiben eingeb- und entnehmbar, oder es kann bei entsprechender Ausbildung des Fahrtschreibers 2 ein gedruckter Beleg über Fahr- und Arbeitszeitdaten ausgegeben werden. Von den Tasten des Tastenfelds 19 dienen die Tasten 20 und 21 dem Aufschalten der Lenkzeiten bzw. der Ruhezeiten des jeweiligen Fahrers auf das Display 15, mit den Tasten 22 und 23 läßt sich das Einziehen und Ausgeben einer Diagrammscheibe steuern.

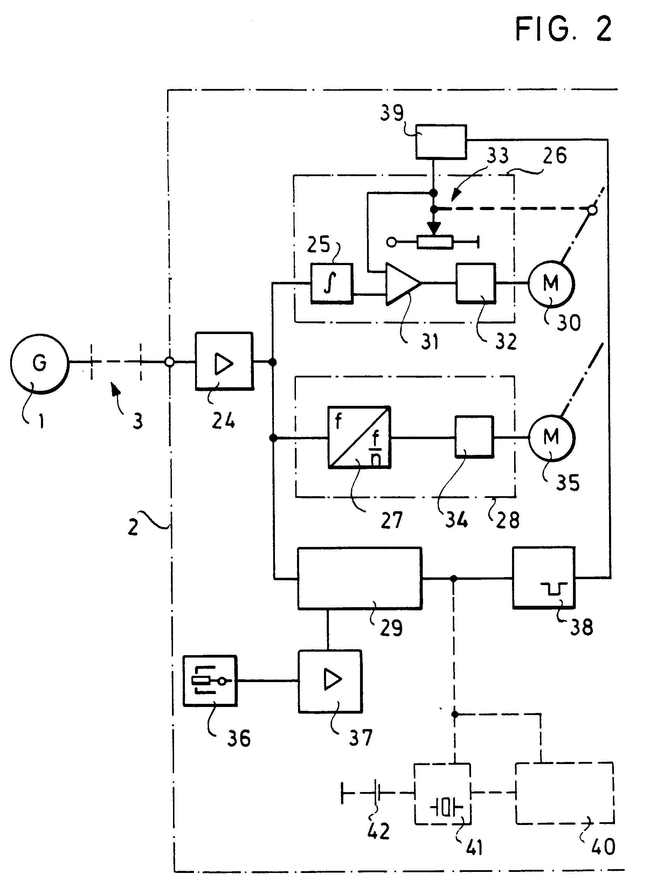

Wie aus Fig. 2 hervorgeht, speist der Geber 1, beispielsweise ein Magnetfeldgeber, aufgrund des Abgriffs am Getriebe des Fahrzeuges eine bestimmte Impulszahl/Streckeneinheit in wenigstens eine Signalleitung des Kabels 3 ein. Das Kabel 3 kann, wie bereits ausgeführt, eine zweite Signalleitung aufweisen und enthält außerdem noch Leitungen für die Spannungsversorgung des Gebers. Diese Impulse, deren Frequenz sich mit der Fahrgeschwindigkeit ändert, werden von einem im Fahrtschreiber 2 befindlichen Impulsformer 24 auf eine bestimmte Impulsdauer geformt und verstärkt und stehen gleichzeitig am Frequenz-Spannungs-Wandler 25 einer Geschwindigkeitsmeßschaltung 26, am Frequenzwandler 27 einer Streckenzählschaltung 28 und an einer Auswerteschaltung 29 an.

Die Geschwindigkeitsmeßschaltung 26 stellt einen Regelverstärker dar, der einen Stellmotor 30 mit einem geschwindigkeitsproportionalen Gleichspannungssignal ansteuert. Der Stellmotor seinerseits dient dem Nachführen der Geschwindigkeitsregistriermittel und dem Einstellen der Anzeigemittel, falls der betreffende Fahrtschreiber mit einer Zeigeranzeige ausgerüstet ist. Mit 31 ist eine Vergleichsschaltung des Regelverstärkers bezeichnet, während 32 eine dem Stellmotor 30 zugeordnete Steuerschaltung darstellt. Ein Potentiometer 33 wandelt den zur Vergleichsschaltung 31 rückzuführenden Ist-Wert der Stellung des Stellmotors 30 in eine Gleichspannung um. Mit der Streckenzählschaltung 28 wird über dessen Steuerschaltung 34 ein Schrittmotor 35 angesteuert, der einen nicht dargestellten Streckenzähler und ein Streckenregistrierorgan des Fahrtschreibers 2 antreibt.

Die Auswerteschaltung 29 ist außer mit dem Drehwertgeber 1 mit einem Bewegungsgeber 36 verknüpft, dessen Signale, vorzugsweise solche, die auf Längs- und/oder Querbeschleunigungen des Fahrzeugs beruhen, in einer Former- und Verstärkerschaltung 37 in Impulse definierter Dauer gewandelt werden, um auf diese Weise ein Überschwingen bzw. ein Prellen des Bewegungsgebers 36 zu unterdrücken. Mit dem Ausgangssignal der Auswerteschaltung 29, sozusagen einem Störimpuls, wird, wie aus der Fig. 2 weiter hervorgeht, ein Monoflop 38 gesteuert, welches über einen Schaltungsteil 39 durch Parallelschalten eines Widerstandes zum Potentiometer 33 eine Spannung an der Vergleichsschaltung 31 anlegt, die dem für die Störungsaufzeichnung vorgesehenen Registrierhub und somit dem hierfür erforderlichen Drehwinkel des Stellmotors 30 entspricht. In diesem Falle wird die Störungsaufzeichnung mit dem Geschwindigkeitsregistrierorgan vorgenommen; es kann aber auch ein zusätzliches, nur für den Störungsaufschrieb vorgesehenes Registrierorgan angesteuert werden. Außerdem ist eine ausschließliche oder zusätzliche Speicherung der Störung denkbar, wobei zur Störungskennzeichnung in einem Datenspeicher 40 von einem Zeitgeber 41 gelieferte Echtzeit-Datensätze eingeschrieben werden. Ein Akkumulator 42 dient der Pufferung der elektronischen Störungserfassung.

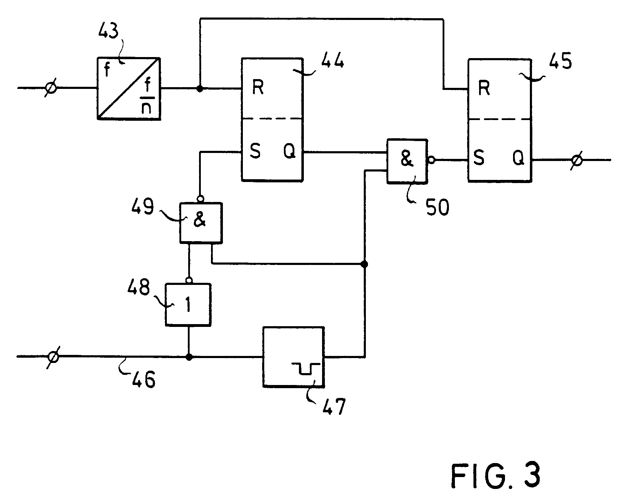

In Fig. 3 ist die Auswerteschaltung 29 näher erläutert. Ein eingangsseitig vorgesehener Frequenzwandler 43 ist mit den Rücksetzeingängen zweier Flip-Flop-Stufen 44 und 45 verbunden. Dabei dient die Flip-Flop-Stufe 44 der Speicherung eines auf der Leitung 46 anstehenden Impulses des Bewegungsmelders 36, während die Flip-Flop-Stufe 45 dazu dient, den ersten Störimpuls zu unterdrücken, was insbesondere bei plötzlichem, verkehrsbedingtem Anhalten bei nicht ausreichend gedämpftem Bewegungsgeber 36 von Vorteil ist. Steht auf der Leitung 46 ein Impuls des Bewegungsgebers an, wird ein Monoflop 47 gestartet und über das Nicht-Glied 48 und das NAND-Gatter 49 das Flip-Flop 44 gesetzt. Liefert der Frequenzwandler 43 innerhalb der durch das Monoflop 47 vorgegebenen Zeit, beispielsweise 8 sec., einen Geberimpuls, so setzt dieser das Flip-Flop 44 zurück, d. h. für ein am Ausgang der Auswerteschaltung 29 befindliches NAND-Gatter 50 ist, wenn am Monoflop 47 nach Ablauf der Schaltzeit das Potential wechselt, die UND-Bedingung nicht mehr erfüllt, so daß die Ausgabe eines Störsignals unterbleibt. Umgekehrt wird von der Auswerteschaltung 29 ein Störsignal abgegeben, wenn innerhalb der Schaltzeit des Monoflops 47 kein Rücksetzen des Flip-Flops 44 erfolgt und das Flip-Flop 45 durch einen vorangegangenen Zyklus bereits gesetzt ist.

Der Vollständigkeit halber sei noch erwähnt, daß im Falle einer Störungsaufzeichnung auf einer Diagrammscheibe die durch das Monoflop 47 in Verbindung mit dem Flip-Flop 45 sich ergebende Pause zwischen zwei Störsignalen eine noch ausreichend dichte Balkenaufzeichnung ermöglicht, andererseits die Gefahr des Durchschreibens vermieden und dazu beigetragen wird, den Strombedarf und die Beanspruchung des Registriersystems so gering wie möglich zu halten.

## Patentansprüche

1. Einrichtung zum Nachweis von Störungen der Signalübertragung in Kraftfahrzeugen unter Verwendung einer Aufzeichnungsanordnung, insbesondere der Signalübertragung zwischen Geschwindigkeitsmeß- und/oder Streckenzählgeräten und außerhalb dieser Geräte angeordneten Drehwertgebern,
dadurch gekennzeichnet,
daß wenigstens ein fahrttypische Kräfte sensierender Bewegungsgeber (36) innerhalb des betreffenden Meßgerätes (2) angeordnet ist und
daß eine Auswerteschaltung (29) vorgesehen ist, welche bei Nichtplausibilität von Signalen des Drehwertgebers (1) mit Signalen des Bewegungsgebers (36) ein die Aufzeichnungsanordnung steuerndes Störsignal liefert.

2. Einrichtung nach Anspruch 1,
dadurch gekennzeichnet,
daß zum Nachweis des Ausbleibens von Signalen des Drehwertgebers (1) die Auswerteschaltung (29) dann ein Störsignal liefert, wenn nach einer bestimmten Zeitdauer ein in der Auswerteschaltung (29) gespeicherter Impuls des Bewegungsgebers (36) nicht durch einen Impuls des Drehwertgebers (1) gelöscht ist.

3. Einrichtung nach Anspruch 2,
dadurch gekennzeichnet,
daß die Auswerteschaltung (29) eine Flip-Flop-Stufe (44) enthält, deren Setzeingang dem Bewegungsgeber (36) zugeordnet und deren Rücksetzeingang mit dem geräteseitigen Signaleingang des Drehwertgebers (1) verschaltet ist und daß ein von den Impulsen des Bewegungsgebers (36) steuerbarer Zeitgeber (Monoflop 47) vorgesehen ist, dessen Ausgang über eine UND-Verbindung mit dem Ausgang der Flip-Flop-Stufe (44) verknüpft ist.

4. Einrichtung nach Anspruch 1,
dadurch gekennzeichnet,
daß die Aufzeichnungsanordnung einen ohne Wandler lesbaren, uhrzeitabhängig angetriebenen Aufzeichnungsträger und ein Registrierorgan umfaßt, welches gesteuert durch das Störsignal auslenkbar ist.

5. Einrichtung nach Anspruch 1,
dadurch gekennzeichnet,
daß zur Durchführung des der Auswerteschaltung (29) zugrunde liegenden Programms ein Mikrocomputer dient, welcher als Störsignal ein uhrzeitabhängiges Datenwort in einen Datenspeicher (40) einschreibt.

6. Einrichtung nach Anspruch 3,
dadurch gekennzeichnet,
daß vor dem Rücksetzeingang der Flip-Flop-Stufe (44) ein Frequenz-Wandler (43) vorgesehen ist mit einem Teilungsverhältnis derart, daß bei geringer Fahrgeschwindigkeit am Ausgang des Frequenz-Wandlers (43) die Impulspausen kürzer sind als die Schaltdauer des Monoflops (47).

7. Einrichtung nach Anspruch 2,
dadurch gekennzeichnet,
daß zur Unterdrückung wenigstens des ersten auftretenden Störsignals am Ausgang der Auswerteschaltung (29) ein Impulsteiler (Flip-Flop-Stufe 45) vorgesehen ist.

8. Einrichtung nach Anspruch 1,
dadurch gekennzeichnet,
daß zum Nachweis eines simulierten Geschwindigkeitsprofils die Auswerteschaltung (29) anhand der Signale vom Drehwert- und Bewegungsgeber (1, 36) vergleicht, ob während und nach einer Beschleunigungsphase eine Geschwindigkeitsänderung des Fahrzeuges erfolgt ist.

## Claims

1. A device for proving disturbances in the signal transmission in motor vehicles, making use of a recording arrangement, in particular the signal transmission between speed measuring and/or distance measuring devices and rotational value transmitters arranged outside these devices, characterized in that at least one movement transmitter (36) detecting forces which are typical of a journey is arranged within the measuring device (2) concerned, and in that there is provided an evaluation circuit (29) which in the event of implausibility of signals from the rotational value transmitter (1) with signals from the movement transmitter (36) delivers a disturbance signal which controls the recording arrangement.

2. A device according to Claim 1, characterized in that, to prove that signals from the rotational value transmitter (1) are missing, the evaluation circuit (29) delivers a disturbance signal if a pulse of the movement transmitter (36) stored in the evaluation circuit (29) is not cleared after a particular time period by a pulse of the rotational value transmitter (1).

3. A device according to Claim 2, characterized in that the evaluation circuit (29) contains a flip-flop stage (44) whereof the setting input is associated with the movement transmitter (36) and whereof the resetting input is connected to the signal input of the rotational value transmitter (1) on the device side, and in that there is provided a timing element (monostable circuit 47) which may be controlled by the pulses of the movement transmitter (36) and whereof the output is linked to the output of the flip-flop stage (44) by way of an AND connection.

4. A device according to Claim 1, characterized in that the recording arrangement comprises a record carrier which is driven in dependence on time and may be read without converters, and a recording member which may be deflected in a manner controlled by the disturbance signal.

5. A device according to Claim 1, characterized in that a microcomputer serves to perform the program forming the basis of the evaluation circuit (29) and records a time-dependent data record as the interference signal in a data memory (40).

6. A device according to Claim 3, characterized in that there is provided upstream of the resetting input of the flip-flop stage (44) a frequency converter (43) having a division ratio such that when there is a low driving speed at the output of the frequency converter (43) the pulse breaks are shorter than the switching duration of the monostable circuit (47).

7. A device according to Claim 2, characterized in that a pulse divider (flip-flop stage 45) is provided to suppress at least the first occurring disturbance signal at the output of the evaluation circuit (29).

8. A device according to Claim 1, characterized in that, to prove a simulated speed profile, the evaluation circuit (29) compares on the basis of signals from the rotational value transmitter and the movement transmitter (1, 36) whether an alteration in speed of the vehicle has occurred during and after an acceleration phase.

## Revendications

1. Dispositif pour la mise en évidence de dérangements de la transmission de signaux dans des véhicules automobiles avec utilisation d'un dispositif d'enregistrement, tout particulièrement de la transmission de signaux entre des appareils de mesure de vitesses de rotation et/ou de compteurs de distances parcourues et des transmetteurs de valeurs de rotation disposés à l'extérieur de ces appareils,
caractérisé par le fait
qu'à l'intérieur de l'appareil de mesure (2) concerné est installé au moins un transmetteur de mouvement (36) captant des forces typiques de la circulation et
qu'il est prévu un circuit d'analyse (29) qui, en cas de vraisemblable incompatibilité de signaux du transmetteur de valeurs de rotation (1) avec des signaux du transmetteur de mouvement (36), fournit un signal parasite commandant le dispositif d'enregistrement.

2. Dispositif selon la revendication 1,
caractérisé par le fait
que, pour la mise en évidence de l'absence de signaux du transmetteur de valeurs de rotation (1), le circuit d'analyse (29) fournira un signal parasite lorsque, après une durée de temps déterminée, une impulsion du transmetteur de mouvement (36) mémorisée dans le circuit d'analyse (29) n'est pas effacée par une impulsion du transmetteur de valeurs de rotation (1).

3. Dispositif selon la revendication 2,
caractérisé par le fait
que le circuit d'analyse (29) contient un étage basculateur bistable (44) dont l'entrée de commande est associée au transmetteur de mouvement (36) et dont l'entrée de remise à zéro est interconnectée avec l'entrée de signal du côté appareil du transmetteur de valeurs de rotation (1) et
qu'il est prévu un générateur de signaux d'horloge (basculateur monostable 47) pouvant être commandé par les impulsions du transmetteur de mouvement (36) dont la sortie est reliée, par l'intermédiaire d'une fonction logique ET, à la sortie de l'étage basculateur bistable (44).

4. Dispositif selon la revendication 1,
caractérisé par le fait
que le dispositif d'enregistrement englobe un support d'enregistrement entraîné en fonction du temps réel et lisible sans convertisseur ainsi qu'un organe enregistreur qui, commandé par le signal parasite, peut être dévié.

5. Dispositif selon la revendication 1,
caractérisé par le fait
qu'à l'exécution du programme étant à la base du circuit d'analyse (29) sert un micro-ordinateur qui inscrit, comme signal parasite, un mot de données en fonction du temps réel dans une mémoire de données (40).

6. Dispositif selon la revendication 3,
caractérisé par le fait
que, en amont de l'entrée de remise à zéro de l'étage basculateur bistable (44), il est prévu un transformateur de fréquence (43) dont le rapport de démultiplication est tel que, en cas de faible vitesse de déplacement, les intervalles d'impulsion à la sortie du transformateur de fréquence sont plus courts que la durée de commutation du basculateur monostable (47).

7. Dispositif selon la revendication 2,
caractérisé par le fait
que, pour la suppression d'au moins le premier signal parasite apparaissant à la sortie du circuit d'analyse (29), il est prévu un diviseur d'impulsions (étage basculateur bistable 45).

8. Dispositif selon la revendication 1,
caractérisé par le fait
que, pour la mise en évidence d'un profil de vitesses simulé, le circuit d'analyse (29) compare, à l'aide des signaux provenant du transmetteur de valeurs de rotation et du transmetteur de mouvement (1, 36), si une variation de vitesse du véhicule s'est produite pendant et après une phase d'accélération.
